# FASCICULE DE BREVET EUROPEEN

(11) **EP 0 847 520 B1**
(45) Date de publication et mention de la délivrance du brevet: **07.04.1999**
(21) Numéro de dépôt: 96926428.2
(22) Date de dépôt: 19.07.1996
(51) Int. Cl.: G01L 3/10

(54) **DISPOSITIF DE MESURE DE COUPLE DE TORSION D'UN ARBRE TOURNANT**
EINRICHTUNG ZUR MESSUNG DES DREHMOMENTES EINER DREHENDEN WELLE
ROTARY SHAFT TORQUE MEASURING DEVICE

(30) Priorité: 31.08.1995 FR 9510248
(43) Date de publication de la demande: 17.06.1998
(73) Titulaire: S.N.R. ROULEMENTS, 74010 Annecy Cédex (FR)
(72) Inventeur: NICOT, Christophe, F-74330 Epagny (FR)
(74) Mandataire: Fernandez, Francis
(86) Numéro de dépôt international: FR9601136
(87) Numéro de publication internationale: WO9708527

(56) Documents cités:
- EP-A- 0 576 310
- GB-A- 2 107 880

## Description

L'invention concerne un dispositif de mesure de couple de torsion sur un arbre tournant. L'invention concerne plus particulièrement un dispositif de mesure du couple de torsion permettant de réduire les effets de la flexion longitudinale sur la précision de la mesure.

La publication FR-2692986 décrit un dispositif de mesure de couple de torsion sur un arbre tournant, dispositif comprenant deux générateurs de champ magnétique, solidaires d'un premier support et situés dans le plan d'une section droite dudit arbre et deux dispositifs détecteurs du champ magnétique, solidaires d'un second support et immobilisés dans le plan d'une autre section droite dudit arbre. Les deux supports sont reliés entre eux par un palier de guidage qui permet de réduire les effets de la flexion longitudinale de l'arbre de torsion sur la variation du rayon de lecture et donc sur la précision de la mesure de torsion.

Le dispositif selon l'invention met à profit les propriétés particulières des arbres de torsion comportant une zone de section réduite. L'utilisation de tels arbres au sein d'un dispositif de mesure de couple de torsion. dans le but de localiser la déformation en torsion sur ladite zone de section réduite. est connue en soi et décrite, par exemple, dans la publication FR-2661246.

Selon l'invention, le dispositif de mesure de couple de torsion sur un arbre tournant comprend deux générateurs de champ magnétique fixés symétriquement par rapport audit arbre dans un premier plan perpendiculaire à ce même arbre et deux organes détecteurs du champ magnétique fixés, symétriquement par rapport à l'arbre, dans un second plan parallèle et décalé axialement par rapport au premier plan. Le dispositif dans lequel lesdits organes détecteurs délivrent un signal proportionnel au couple de torsion par suite du décalage angulaire relatif des générateurs par rapport aux organes détecteurs est caractérisé en ce que le plan médian des premier plan et second plan passe par le point de flèche maximale de l'arbre sous effort de flexion longitudinale.

Selon une autre caractéristique de l'invention, l'arbre comporte une zone de section réduite qui porte le point de flèche maximale et les générateurs et les organes détecteurs sont portés respectivement par un premier support et un second support qui sont fixés sur l'arbre et qui assurent le positionnement du plan médian à la hauteur dudit point de flèche maximale.

Selon une autre caractéristique de l'invention, le premier et le second supports consistent chacun en un premier élément de forme sensiblement tubulaire qui s'étend autour de l'arbre et sur lequel est fixé un second élément de forme sensiblement annulaire qui s'étend radialement.

Selon une autre caractéristique de l'invention, le point de flèche maximale de l'arbre sous effort de flexion longitudinale se situe à l'aplomb du milieu de la zone de section réduite.

Le dispositif selon l'invention permet de réduire la variation du rayon de lecture provoquée par la flexion longitudinale de l'arbre de torsion et donc d'améliorer la précision de la mesure de torsion, tout en évitant le recours à un palier intermédiaire.

D'autres caractéristiques et avantages de l'invention apparaîtront à la lecture de la description d'un exemple de réalisation du dispositif de mesure de couple selon l'invention, en référence au dessin dans lequel :
- la figure 1 est une vue en coupe longitudinale du dispositif selon l'invention,
- la figure 2 est une vue schématique d'une variante du dispositif selon l'invention dans laquelle le plan médian de l'entrefer passe par le point de flèche maximale de l'arbre sous effort de flexion,
- la figure 3 est une vue schématique du dispositif de la figure 2 en flexion longitudinale,
- la figure 4 est une vue schématique d'un dispositif dans lequel le plan médian de l'entrefer ne passe pas par le point de flèche maximale de l'arbre sous effort de flexion,
- la figure 5 est une vue schématique du dispositif de la figure 4 en flexion longitudinale,
- la figure 6 est une vue en coupe longitudinale partielle d'une variante du dispositif selon l'invention destinée à être utilisée au sein d'un boîtier de direction assistée.

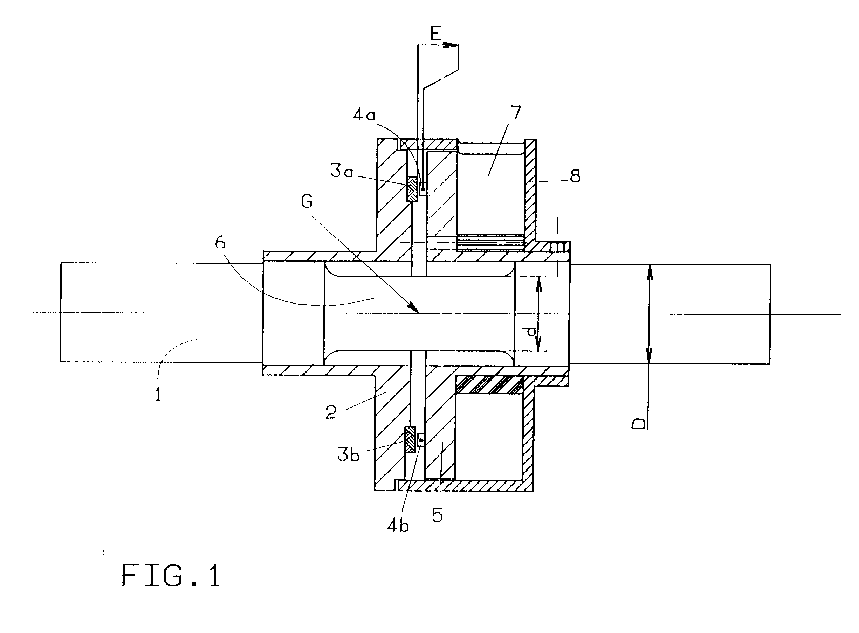

Le dispositif représenté sur la figure 1 est destiné à mesurer la torsion d'un arbre 1 de diamètre D. Son fonctionnement est décrit dans le document FR-2692986. L'arbre 1 porte un premier support 2 sur lequel sont fixés, symétriquement par rapport à l'arbre 1, deux générateurs 3a et 3b de champ magnétique possédant une structure aimantée à directions antiparallèles. Deux organes détecteurs 4a et 4b du champ magnétique sont fixés, symétriquement par rapport à l'arbre 1, sur un second support 5 également porté par l'arbre 1, lesdits organes détecteurs 4a et 4b étant décalés axialement par rapport auxdits générateurs 3a et 3b, séparés par l'entrefer E.

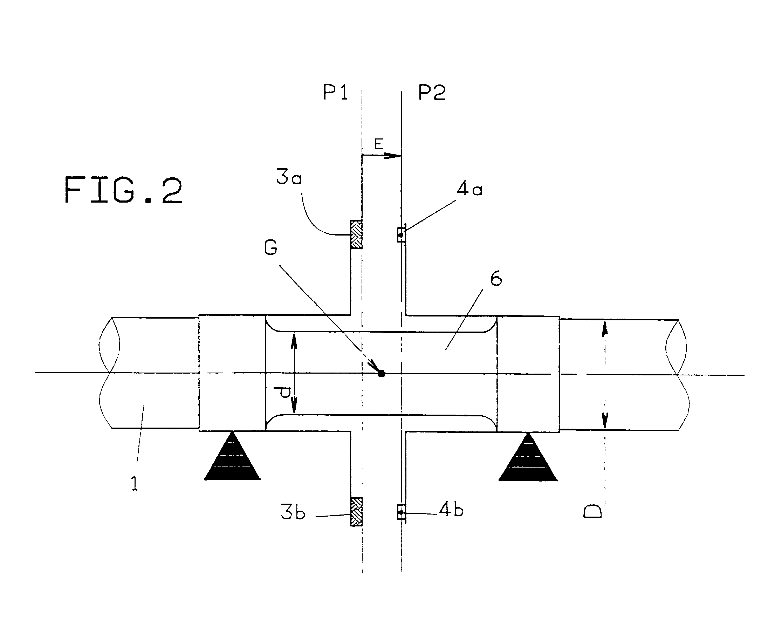

L'arbre 1 comporte. entre les supports 2 et 5. une zone 6 de section réduite de diamètre d. inférieur au diamètre D de l'arbre 1. Comme le moment de torsion de l'arbre 1 varie en fonction de la puissance quatrième du diamètre dudit arbre 1. la rigidité en torsion varie, lorsque l'on passe de l'arbre 1 de diamètre D à la zone 6 de section réduite, selon le facteur (d/D)⁴. Cette variation de rigidité permet, d'une manière connue en soi. par un choix judicieux du rapport d/D. de localiser la déformation en torsion de l'arbre 1 dans la zone 6 de section réduite. Elle permet également d'améliorer la sensibilité du dispositif de mesure du couple. De plus. la rigidité en flexion de l'arbre 1 varie également en fonction de la puissance quatrième du diamètre dudit arbre 1. Par conséquent, la rigidité en flexion longitudinale varie également, lorsque l'on passe de l'arbre 1 de diamètre D à la zone 6 de section réduite, selon le facteur (d/D)⁴. Il est donc possible de localiser la déformation en flexion longitudinale de l'arbre 1 et donc la flèche maximale sous effort dans la zone 6 de section réduite. A cet effet, on maintient l'arbre 1 sur deux appuis situés hors de la zone 6 de section réduite. De façon générale, le point de flèche maximale sous effort de flexion longitudinale est déterminé en fonction des conditions de chargement de l'arbre 1. Dans le cas particulier où les deux appuis sont symétriquement situés de part et d'autre de la zone 6 de section réduite, comme il est représenté sur la figure 2, la flèche maximale sous effort de flexion longitudinale est située au centre G de ladite zone 6 de section réduite.

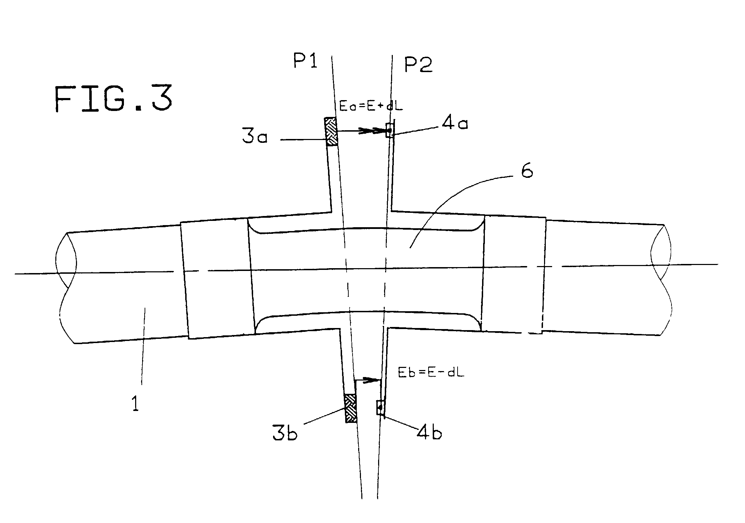

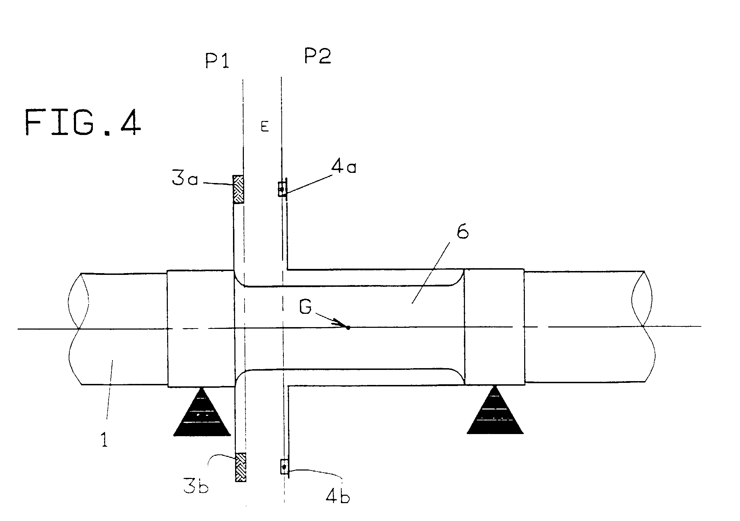

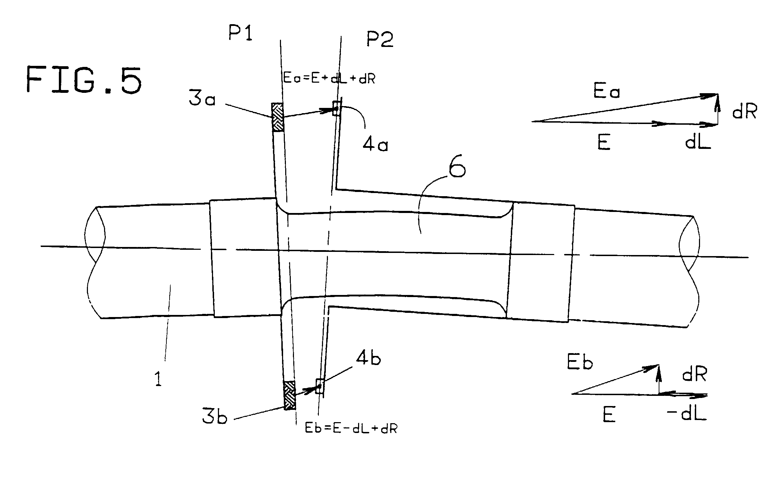

Il est alors particulièrement avantageux de faire passer le plan médian de l'entrefer E par le centre G de ladite zone 6 de section réduite, comme il est représenté sur la figure 2. Le plan médian de l'entrefer E est le plan médian du premier plan P1 perpendiculaire à l'arbre 1 et passant par les faces actives des deux générateurs 3a et 3b de champ magnétique - on entend par faces actives des générateurs 3a et 3b les faces en regard des détecteurs 4a et 4b - et du second plan P2 perpendiculaire à l'arbre 1 et passant par les organes détecteurs 4a et 4b du champ magnétique. En effet, dans cette configuration, la flexion longitudinale entraîne une rotation relative desdits plans P1, P2 autour d'un axe perpendiculaire à celui de l'arbre 1. Les variations de l'entrefer E provoquées par cette rotation se traduisent par une variation. à l'extérieur de la flexion. égale à l'écartement longitudinal +dL et une variation, à l'intérieur de la flexion, égale au rapprochement longitudinal -dL. comme il est représenté sur la figure 3. Dans le cas où le plan médian ne passe pas le centre G de ladite zone 6 de section réduite. comme il est représenté sur la figure 4, la flexion entraîne un déplacement supplémentaire radial et relatif des plans P1 et P2. Ce déplacement radial entraîne une composante radiale +dR de variation de l'entrefer E qui vient s'ajouter respectivement aux déplacements longitudinaux +dL et -dL. comme il est représenté sur la figure 5. pour donner respectivement une variation dR+dL, à l'extérieur de la flexion, et une variation dR-dL, à l'intérieur de la flexion. Le dispositif selon l'invention permet donc de supprimer la composante radiale de la variation de l'entrefer E provoquée par la flexion longitudinale de l'arbre 1 et donc de limiter cette variation d'entrefer E à la composante longitudinale. Or, la mesure de torsion réalisée par le dispositif selon l'intention est proportionnelle à la somme algébrique de l'entrefer Ea séparant le premier générateur 3a du premier organe détecteur 4a et de l'entrefer Eb séparant le second générateur 3b du second organe détecteur 4b. C'est à dire que, lorsque la composante radiale est supprimée, la valeur de torsion mesurée est proportionnelle à Ea+Eb=(E+dL)+(E-dL)=2E et donc indépendante de la flexion longitudinale. Au contraire, en présence d'une composante radiale, la valeur de torsion mesurée est proportionnelle à Ea+Eb=(E+dL+dR)+(E-dL+dR)=2E+2dR et donc dépendante de la flexion longitudinale. Le fait de faire passer le plan médian de l'entrefer E par le point de flèche maximale de l'arbre 1 permet donc d'annuler l'erreur de mesure de torsion provoquée par la flexion longitudinale de l'arbre.

Conformément à l'invention, les supports 2 et 5 seront tels qu'ils permettent de faire passer le plan médian des plans P1 et P2 contenant respectivement les générateurs 3a et 3b de champ magnétique et les organes détecteurs 4a et 4b du champ magnétique par le centre G de flexion longitudinale de l'arbre 1.

Sur la figure 1, les organes détecteurs 4a,4b étant situés sur une partie tournante. le signal électrique représentatif du couple mesuré est rapporté dans un repère fixe, par exemple par un passage tournant de type câble spiral 7. enroulé à l'intérieur d'un boîtier de protection 8

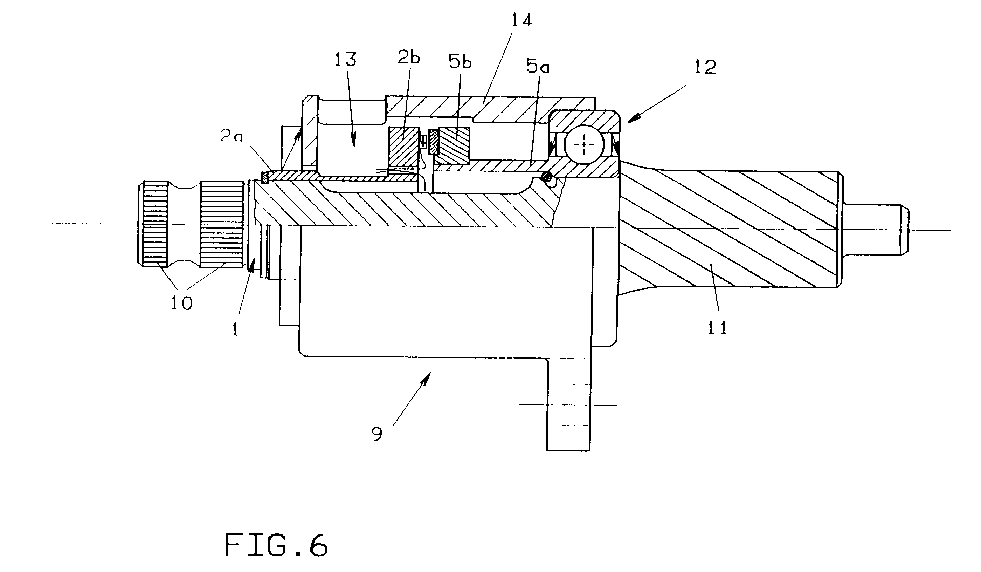

La figure 6 est une représentation d'une variante d'application du dispositif détecteur de couple selon l'invention, intégrée à un dispositif de direction assistée 9. Les extrémités de l'arbre 1 de torsion sont adaptées de manière à réaliser respectivement des cannelures 10 pour permettre le raccordement à un arbre de colonne de direction d'une part et la réalisation d'un pignon 11 de crémaillère d'autre part. Le support 2 des générateurs 3a et 3b de champ magnétique et le support 5 des organes détecteurs 4a et 4b du champ magnétique sont constitués chacun d'un premier élément 2a,5a de forme sensiblement tubulaire qui s'étend autour de l'arbre 1 et sur lequel est fixé respectivement un second élément 2b,5b de forme sensiblement annulaire qui s'étend radialement et peut tourner respectivement autour du premier élément 2a,5a pour permettre le réglage de positionnement initial des organes détecteurs 4a,4b en face des transitions magnétiques des générateurs 3a,3b de champ magnétique, Dans l'exemple de la figure 6, le second support 5 constitue en fait le prolongement de la bague intérieure du palier de montage 12. Le passage tournant 13 peut être intégré dans le boîtier de direction 14 comme il est représenté sur la figure 6.

Bien entendu, l'invention n'est nullement limitée au mode de réalisation décrit et illustré qui n'a été donné qu'à titre d'exemple. En particulier, il est tout à fait envisageable, à la place de générateurs magnétiques et de détecteurs correspondants, d'utiliser, par exemple, des capteurs optiques.

## Revendications

1. Dispositif de mesure de couple de torsion sur un arbre (1) tournant comprenant deux générateurs (3a,3b) de champ magnétique fixés symétriquement par rapport audit arbre (1) dans un premier plan (P1) perpendiculaire à ce même arbre (1) et deux organes détecteurs (4a,4b) du champ magnétique fixés, symétriquement par rapport à l'arbre (1), dans un second plan (P2) parallèle et décalé axialement par rapport au premier plan (P1), dispositif dans lequel lesdits organes détecteurs (4a,4b) délivrent un signal proportionnel au couple de torsion par suite du décalage angulaire relatif des générateurs (3a,3b) par rapport aux organes détecteurs (4a.4b) caractérisé en ce que le plan médian des premier plan (P1) et second plan (P2) passe par le point de flèche maximale de l'arbre (1), sous effort de flexion longitudinale.

2. Dispositif de mesure de couple de torsion selon la revendication 1 caractérisé en ce que l'arbre (1) comporte une zone (6) de section réduite qui porte le point de flèche maximale et en ce que les générateurs (3a,3b) et les organes détecteurs (4a,4b) sont portés respectivement par un premier support (2) et un second support (5) qui sont fixés sur l'arbre (1) et qui assurent le positionnement du plan médian à la hauteur dudit point de flèche maximale.

3. Dispositif de mesure de couple de torsion selon la revendication 2 caractérisé en ce que le premier (2) et le second (5) supports consistent chacun en un premier élément (2a,5a) de forme sensiblement tubulaire qui s'étend autour de l'arbre (1) et sur lequel est fixé un second élément (2b,5b) de forme sensiblement annulaire qui s'étend radialement.

4. Dispositif de mesure de couple de torsion selon l'une quelconque des revendications 2 ou 3 caractérisé en ce que le point de flèche maximale de l'arbre (1) sous effort de flexion longitudinale se situe à l'aplomb du milieu de la zone (6) de section réduite.

5. Application du dispositif de mesure de couple de torsion selon l'une quelconque des revendications 2 à 4 à un dispositif de direction assistée (9) dont le palier de montage (12) se prolonge pour constituer un des supports (5).

## Patentansprüche

1. Einrichtung zum Messen des Torsionsmoments einer sich drehenden Welle (1) mit zwei Magnetfeldgeneratoren (3a, 3b), die symmetrisch zur Welle (1) in einer zur Welle rechtwinkligen ersten Ebene (P1) angeordnet sind, und zwei Magnetfelddetektoren (4a, 4b), die symmetrisch zur Welle (1) in einer zweiten Ebene (P2) liegen, die parallel zur ersten Ebene (P1) ist und von diese axial beabstandet verläuft, wobei die Magnetfelddetektoren (4a, 4b) ein Signal abgeben, das portional dem Torsionsmoment infolge der relativen Winkelauslenkung der Magnetfeldgeneratoren (3a, 3b) gegenüber den Magnetfelddetektoren (4a, 4b) ist, dadurch gekennzeichnet, daß die Mittenebene zwischen der ersten Ebene (P1) und der zweiten Ebene (P2) durch den Ort des Maximums der Durchbiegung verläuft, die die Welle (1) infolge der Längsbiegung erfährt.

2. Torsionsmomentmeßeinrichtung nach Anspruch 1, dadurch gekennzeichnet, daß die Welle (1) einen Bereich (6) verringerten Querschnitts enthält, in dem sich das Durchbiegungsmaximum befindet, und daß die Magnetfeldgeneratoren (3a, 3b) und die Magnetfelddetektoren (4a, 4b) von einer ersten bzw. einer zweiten Abstützung (2 bzw. 5) gehalten sind, die auf der Welle (1) befestigt sind und die Sollage der Mittenebene im Durchbiegungsmaximum gewährleisten.

3. Torsionsmomentmeßeinrichtung nach Anspruch 2, dadurch gekennzeichnet, daß die erste (2) und die zweite (5) Abstützung jeweils aus einem im wesentlichen rohrförmigen ersten Element (2a, 5a) bestehen, das die Welle (1) umgreift und auf dem ein im wesentlichen ringförmiges zweites Element (2b, 5b) befestigt ist, das sich radial erstreckt.

4. Torsionsmomentmeßeinrichtung nach einem de Ansprüche 2 oder 3, dadurch gekennzeichnet, daß das Maximum der von der Längsbiegung verursachten Biegeauslenkung lotrecht zur Mitte des Bereichs (6) verringerten Querschnitts liegt.

5. Verwendung der Torsionsmomentmeßeinrichtung nach einem der Ansprüche 2 bis 4 in einer Servolenkvorrichtung (9), deren Montagelager (12) zu einer (5) der Abstützungen verlängert ist.

## Claims

1. Device for measuring torque on a rotating shaft (1) comprising two magnetic field generators (3a, 3b) fixed symmetrically with respect to said shaft (1) in a first plane (P1) perpendicular to this same shaft (1), and two magnetic field sensor means (4a, 4b) fixed symmetrically with respect to the shaft (1) in a second plane (P2) parallel to and offset axially with respect to the first plane (P1), said device in which said sensor means (4a, 4b) deliver a signal proportional to the torque as a result of the relative angular displacement of the generators (3a, 3b) with respect to the sensor means (4a, 4b), characterised in that the median plane of the first plane (P1) and second plane (P2) passes through the point of maximum deflection of the shaft (1), under longitudinal bending strain.

2. Device for measuring torque according to claim 1, characterised in that the shaft (1) has a zone (6) with a reduced section which bears the point of maximum deflection, and in that the generators (3a, 3b) and the sensor means (4a, 4b) are carried respectively by a first support (2) and a second support (5) which are fixed on the shaft (1) and which provide the positioning of the median plane at the height of said point of maximum deflection.

3. Device for measuring torque according to claim 2, characterised in that the first (2) and the second (5) supports each consist of a first element (2a, 5a) of substantially tubular shape, which extends around the shaft (1), and on which is fixed a second element (2b, 5b) of substantially annular form, which extends radially.

4. Device for measuring torque according to any one of the preceding claims, characterised in that the point of maximum deflection of the shaft (1) under longitudinal bending strain is located perpendicularly with respect to the centre of the zone (6) with a reduced section.

5. Application of the device for measuring torque according to any one of claims 2 to 4, to a power-assisted steering device (9), the mounting bearing (12) of which is elongated to constitute one of the supports (5).
